# EUROPEAN PATENT SPECIFICATION

(11) **EP 4 402 433 B1**
(45) Date of publication and mention of the grant of the patent: **16.09.2026**
(21) Application number: 21790751.8
(22) Date of filing: 17.09.2021
(51) Int. Cl.: G01C 21/20, G01C 21/16

(54) **LOCATION RECOGNITION USING INERTIAL MEASUREMENT UNIT**
STANDORTERKENNUNG MIT HILFE VON TRÄGHEITSMESSGERÄTEN
RECONNAISSANCE DE L'EMPLACEMENT AU MOYEN D'UNE UNITÉ DE MESURE INERTIELLE

(43) Date of publication of application: 24.07.2024
(60) Divisional application: 26198120.3
(73) Proprietor: HID Global Corporation, Austin, TX 78753 (US)
(72) Inventor: ROWE, Robert Kjell, Corrales, New Mexico 87048 (US); MING, Jing, Albuquerque, New Mexico 87113 (US)
(74) Representative: Kramer Barske Schmidtchen Patentanwälte PartG mbB
(86) International application number: PCT/US2021/071497
(87) International publication number: WO 2023/043477

(56) References cited:
- EP-A1- 2 878 924
- US-A1- 2012 130 632
- US-A1- 2015 281 910
- US-A1- 2015 341 756
- US-A1- 2018 245 927
- US-B1- 10 257 658

## Description

### TECHNICAL FIELD

Embodiments described herein generally relate to recognizing the location of a person based on signals from an inertial measurement unit (IMU) held or carried by the person.

### BACKGROUND

Many digital services and features require an accurate estimation of a user's location. In outdoor environments, location estimation is often performed using signals from a global navigation satellite system (GNSS) such as the Global Positioning System (GPS). However, GNSS signals are generally not available or very reliable inside buildings and other environments where the satellite signals are attenuated. In these environments, a variety of radio frequency (RF) technologies can be used to provide real-time location services (RTLS). For example, beacon and receiver devices using Bluetooth or ultra-wideband (UWB) frequencies and protocols may be used by multilateration algorithms to estimate the position of the beacon devices. But, such technologies generally require costly infrastructure and setup. WiFi fingerprinting is another technology that has been used for RTLS in indoor environments. However, with WiFi fingerprinting, performing initial calibration and maintaining system accuracy as access points change can be burdensome.

Distinct from RF-based RTLS technologies, the position of a person may be estimated using an inertial measurement unit (IMU) that the person holds, wears, or is mounted on some portion of their body. In particular, IMUs that are available and present in most modern smartphones can be used to estimate the smartphone holder's position. These IMUs typically comprise a three-axis accelerometer, a three-axis gyroscope, and a three-axis magnetometer. There are a variety of techniques by which signals from these different measurement systems are combined to estimate a person's motion by integrating the heading and distance for each step taken. However, due to noise and biases in the IMU sensors, estimating the person's path and location through integration is generally prone to significant errors, especially as the time from the last known position increases. Thus, estimating the person's path and location through integration can be wildly off, in even short distances.

US 2018/245927 Al describes navigate, track, and position mobile devices in GPS-denied or GPS-inaccurate areas with automatic map generation.

US 10 257 658 Bl refers to a self-learning localization data repository.

In US 2012/130632 Al a system and method for locating, tracking, and/or monitoring the status of personnel and/or assets, both indoors and outdoors, is disclosed.

US 2015/281910 Al discloses techniques and systems for indoor localization.

EP 2 878 924 Al refers to inertial sensors and more particularly using such inertial sensors for determining location signatures using such sensors.

US 2015/341756 Al describes techniques for determining the position of a mobile device and to refining a coarse location using information associated with a geofeature.

For at least these reasons, there is a need in the art for more reliable methods and systems for determining a person's location using an IMU.

### BRIEF SUMMARY

The following presents a simplified summary of one or more embodiments of the present disclosure in order to provide a basic understanding of such embodiments. This summary is not an extensive overview of all contemplated embodiments, and is intended to neither identify key or critical elements of all embodiments, nor delineate the scope of any or all embodiments.

The present disclosure, in one or more embodiments, relates to a method for performing a calibration or measurement for known locations in an environment, according to claim 1. The method comprises identifying one or more locations of interest (LOIs) within the environment; determining a reference path signature for each of the one or more LOIs; and for each reference path signature, storing the reference path signature with data indicating to which LOI it corresponds. Identifying the one or more LOIs within the environment comprises, for each of the one or more LOIs, receiving instruction from a device at a unique location within the environment to identify the unique location as an LOI.

While multiple embodiments are disclosed, still other embodiments of the present disclosure will become apparent to those skilled in the art from the following detailed description, which shows and describes illustrative embodiments of the invention. As will be realized, the various embodiments of the present disclosure are capable of modifications in various obvious aspects, all without departing from the scope of the present disclosure. Accordingly, the drawings and detailed description are to be regarded as illustrative in nature and not restrictive.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 illustrates an example environment comprising a plurality of distinct locations of interest;
FIG. 2 illustrates a block diagram schematic of various example components of an example machine that may be used as, for example, a user device or server device of the present disclosure;
FIG. 3 is a flow chart generally illustrating an example method for calibrating an environment, such as the example environment of FIG. 1; and
FIG. 4 is a flow chart generally illustrating an example method for identifying or recognizing the location of a person based on signals from an IMU held or carried by the person.

### DETAILED DESCRIPTION

The present disclosure generally relates to recognizing the location of a person based on signals from an inertial measurement unit (IMU) held or carried by the person. At a very general level, as a person moves from a first known location to a second known location (or destination) within an environment, a series of IMU readings (e.g., a temporal sequence of IMU readings) can be used as a signature for the second known location. The person or other user could perform a calibration or measurement for each known location within the environment to generate one or more reference signatures for each known location, and, thereafter, an unknown signature could be compared to each reference signature to determine a person's present location within the environment.

More specifically, in many instances, the relatively immediate path leading up to a location within an environment, such as but not limited to, a doorway or other entranceway, a room or other defined space, etc., is distinct from the relatively immediate paths leading to other nearby locations within that environment. For example, when a person enters a building at a controlled entry point (e.g., a known location), the person may walk in a particular direction or directions for a certain number of steps before reaching and entering the person's office, which is different than the direction(s) and/or number of steps the person might take to enter another office or a particular meeting room in the building. As another example, when a person enters that person's own home, the path (e.g., the particular direction(s) and/or number of steps) the person takes to get to the kitchen is different than the path the person takes to get to the family room. In this manner, the path that a person takes while approaching a destination location, or location of interest (LOI), becomes a "signature" for the LOI. Accordingly, rather than attempting to use readings from an IMU held or carried by a person to estimate the person's path continuously using integration techniques, which is prone to significant errors that accumulate over time and distance, the sequence of steps (e.g., the particular direction(s) and/or number of steps) that a person completed relatively immediately prior to reaching an LOI can be used as, or used to generate, a current path signature. Such a current path signature is distinct from the path signatures corresponding to other locations of interest (LOIs) within the same environment. The current path signature may be compared to a set of previously generated reference path signatures for LOIs within the environment, and the current location of the person may be identified or recognized as the LOI corresponding to a previously generated reference path signature that most similarly matches the current path signature.

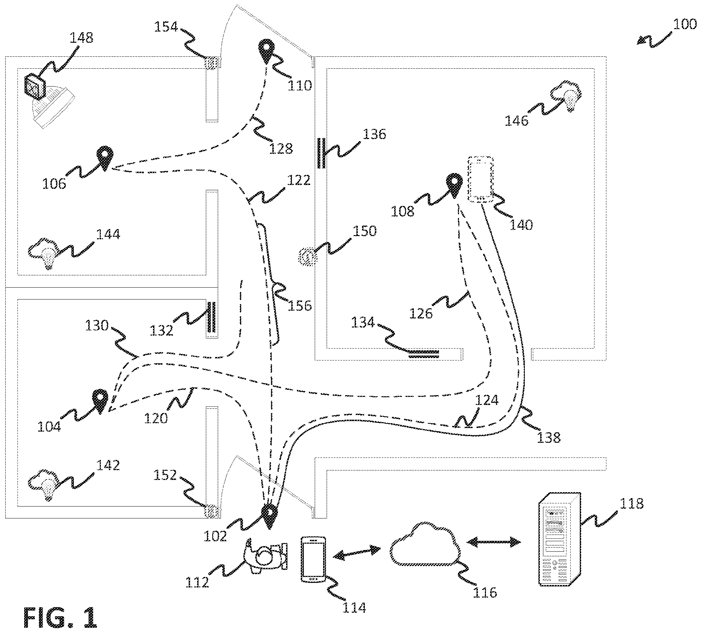

With reference to FIG. 1, an example environment 100 comprising a plurality of distinct LOIs 102, 104, 106, 108, 110 is illustrated. LOIs may be any location within environment 100, such as but not limited to, a room, office, or other defined space (e.g., LOIs 104, 106, 108), a doorway or other entranceway (e.g., LOIs 102, 110), etc. A person or user 112 within or entering environment 100 may hold or carry a device 114 having an IMU. The IMU can include one or more sensors that measure and provide readings about an object's or body's specific force or acceleration, an object's or body's angular rate, the orientation of an object or body, and/or the magnetic field around the object or body. In examples, the IMU can include one or more of an accelerometer (e.g., a three-axis accelerometer), a gyroscope (e.g., a three-axis gyroscope), a magnetometer (e.g., a three-axis magnetometer), or any other suitable sensor for measuring or sensing an object's or body's specific force or acceleration, an object's or body's angular rate, the orientation of an object or body, and/or the magnetic field around the object or body. Device 114 can be or include, for example but not limited to, a personal computer (PC), a tablet PC, a personal digital assistant (PDA), a mobile telephone or smartphone, or the like. Some example environments 100 may further include a network 116 through which device 114 may communicate with one or more server devices 118. Example networks suitable for network 116 can include a local area network (LAN), wide area network (WAN), packet data network (e.g., the Internet), mobile telephone network (e.g., cellular network), Plain Old Telephone (POTS) network, wireless data network (e.g., IEEE 802.11 family of standards known as Wi-Fi or IEEE 802.16 family of standards known as WiMax), networks based on the IEEE 802.15.4 family of standards, and/or peer-to-peer (P2P) network, among others.

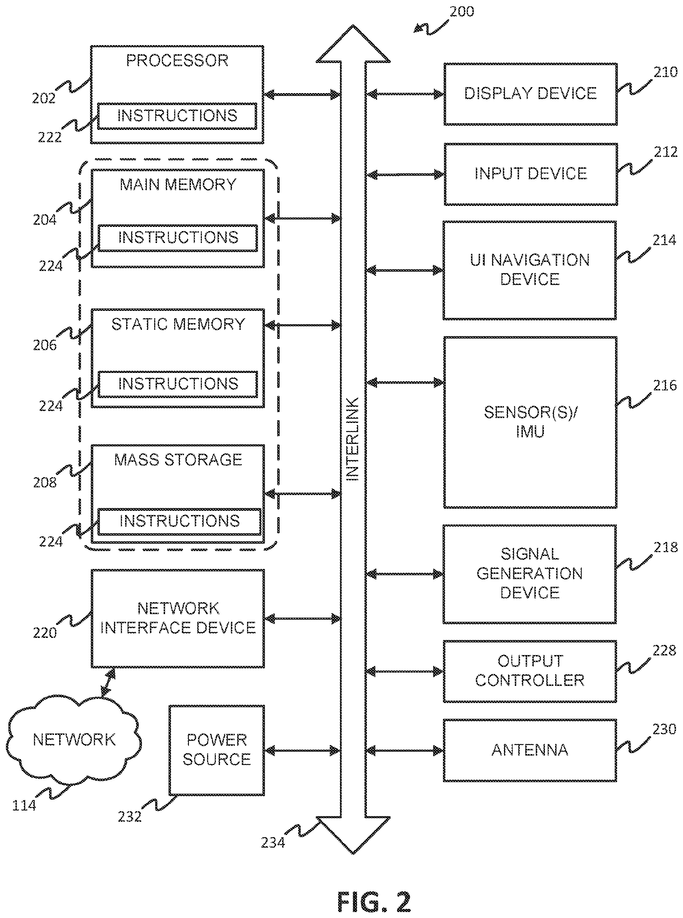

FIG. 2 illustrates a more specific block diagram schematic of various example components of an example machine 200 that can be used as device 114 or server 118 and upon which a set or sequence of instructions may be executed to cause the machine to perform any one of, or any portion thereof, the methodologies described herein. Examples, as described herein, can generally include, or can operate by, logic or a number of components, modules, or mechanisms in machine 200. Modules may be hardware, software, or firmware communicatively coupled to one or more processors in order to carry out the operations described herein. Generally, circuitry (e.g., processing circuitry) of example machine 200 may include a collection of circuits implemented in tangible entities of the machine that include hardware (e.g., simple circuits, gates, logic, etc.). Circuitry membership can be flexible over time. Circuitries include members that can, alone or in combination, perform specified operations when operating. In some examples, hardware of the circuitry can be immutably designed to carry out a specific operation (e.g., hardwired). In some examples, the hardware of the circuitry can include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions permit embedded hardware (e.g., the execution units or a loading mechanism) to create members of the circuitry in hardware via the variable connections to carry out portions of the specific operation when in operation. Accordingly, in some examples, the machine readable medium elements are part of the circuitry or are communicatively coupled to the other components of the circuitry when the device is operating. In some examples, any of the physical components can be used in more than one member of more than one circuitry. For example, under operation, execution units can be used in a first circuit of a first circuitry at one point in time and reused by a second circuit in the first circuitry, or by a third circuit in a second circuitry at a different time. Additional and/or more specific examples of components with respect to machine 200 follow.

In some embodiments, machine 200 can operate as a standalone device or can be connected (e.g., networked) to other machines. In a networked deployment, machine 200 can operate in the capacity of a server machine, a client machine, or both in server-client network environments. In some examples, machine 200 can act as a peer machine in a peer-to-peer (P2P) (or other distributed) network environment. Machine 200 can, for example, be or include a PC, a tablet PC, a PDA, a mobile telephone, a web appliance, a network router, switch or bridge, or generally any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. In an example, machine 200 may include a combination of device 114 and server 118.

Machine (e.g., mobile device or computer system) 200 can include a hardware processor 202 (e.g., a central processing unit (CPU), a graphics processing unit (GPU), a hardware processor core, or any combination thereof) and a main memory 204, a static memory (e.g., memory or storage for firmware, microcode, a basic-input-output (BIOS), unified extensible firmware interface (UEFI), etc.) 206, and/or mass storage 208 (e.g., hard drives, tape drives, flash storage, or other block devices) some or all of which can communicate with each other via an interlink (e.g., bus) 234. Machine 200 can further include a display device 210, an input device 212, and/or a user interface (UI) navigation device 214. Examples of suitable display devices include, without limitation, one or more LEDs, a LCD panel, a display screen, a touchscreen, one or more lights, etc. Example input devices and UI navigation devices include, without limitation, one or more buttons, a keyboard, a touch-sensitive surface, a stylus, a camera, a microphone, etc. In some examples, one or more of the display device 210, input device 212, and/or UI navigation device 214 can be a combined unit, such as a touch screen display. Machine 200 can additionally include a signal generation device 218 (e.g., a speaker), a network interface device 220, one or more antennas 230, a power source 232, and one or more sensors 216. Machine 200 can include an output controller 228, such as a serial (e.g., universal serial bus (USB)), parallel, or other wired or wireless (e.g., infrared (IR), NFC, etc.) connection to communicate with or control one or more peripheral devices (e.g., a printer, card reader, etc.).

Processor 202 can correspond to one or more computer processing devices or resources. For instance, processor 202 can be provided as silicon, as a Field Programmable Gate Array (FPGA), an Application-Specific Integrated Circuit (ASIC), any other type of Integrated Circuit (IC) chip, a collection of IC chips, or the like. As a more specific example, processor 202 can be provided as a microprocessor, Central Processing Unit (CPU), or plurality of microprocessors or CPUs that are configured to execute instructions sets stored in an internal memory 222 and/or memory 204, 206, 208.

Any of memory 204, 206, and 208 can be used in connection with the execution of application programming or instructions by processor 202 for performing any of the functionality or methods described herein, and for the temporary or long-term storage of program instructions or instruction sets 224 and/or other data for performing any of the functionality or methods described herein, such as methods for recognizing the location of a person based on signals from an IMU, or any portion thereof, as described herein. Any of memory 204, 206, 208 can comprise a computer readable medium that can be any medium that can contain, store, communicate, or transport data, program code, or instructions 224 for use by or in connection with machine 200. The computer readable medium can be, for example but is not limited to, an electronic, magnetic, optical, electromagnetic, infrared, or semiconductor system, apparatus, or device. More specific examples of suitable computer readable medium include, but are not limited to, an electrical connection having one or more wires or a tangible storage medium such as a portable computer diskette, a hard disk, a random access memory (RAM), a read-only memory (ROM), an erasable programmable read-only memory (EPROM or EEPROM), Dynamic RAM (DRAM), a solid-state storage device, in general, a compact disc read-only memory (CD-ROM), or other optical or magnetic storage device. Computer readable media includes, but is not to be confused with, computer readable storage medium, which is intended to cover all physical, non-transitory, or similar embodiments of computer readable media.

Network interface device 220 includes hardware to facilitate communications with other devices over a communication network, such as network 116, utilizing any one of a number of transfer protocols (e.g., frame relay, internet protocol (IP), transmission control protocol (TCP), user datagram protocol (UDP), hypertext transfer protocol (HTTP), etc.). Example communication networks can include a local area network (LAN), a wide area network (WAN), a packet data network (e.g., the Internet), mobile telephone networks (e.g., cellular networks), Plain Old Telephone (POTS) networks, wireless data networks (e.g., IEEE 802.11 family of standards known as Wi-Fi or IEEE 802.16 family of standards known as WiMax), networks based on the IEEE 802.15.4 family of standards, and peer-to-peer (P2P) networks, among others. In some examples, network interface device 220 can include an Ethernet port or other physical jack, a Wi-Fi card, a Network Interface Card (NIC), a cellular interface (e.g., antenna, filters, and associated circuitry), or the like. In some examples, network interface device 220 can include one or more antennas to wirelessly communicate using, for example, at least one of single-input multiple-output (SIMO), multiple-input multiple-output (MIMO), or multiple-input single-output (MISO) techniques.

Antenna 230 can correspond to one or multiple antennas and can be configured to provide for wireless communications between, for example, any of the devices described herein, such as but not limited to, directly or indirectly between device 114, server 118, and/or IoT devices (e.g., devices 142, 144, 146, 148, 150, 152, 154 described in further detail below). Antenna(s) 230 can be arranged to operate using one or more wireless communication protocols and operating frequencies including, but not limited to, the IEEE 802.15.1, Bluetooth, Bluetooth Low Energy (BLE), near field communications (NFC), ZigBee, GSM, CDMA, Wi-Fi, RF, UWB, and the like. By way of example, antenna(s) 230 can be RF antenna(s), and as such, may transmit/receive RF signals through free-space to be received/transferred by another device having an RF transceiver.

Power source 232 can be any suitable internal power source, such as a battery, capacitive power source or similar type of charge-storage device, etc., and/or can include one or more power conversion circuits suitable to convert external power into suitable power (e.g., conversion of externally-supplied AC power into DC power) for components of the machine 200. Power source 232 can also include some implementation of surge protection circuitry to protect the components of machine 200 from power surges.

Sensor(s) 216 can include any suitable sensor or sensors. As described above, in examples herein, sensor(s) 216 can include an IMU. The IMU can include one or more of an accelerometer, a gyroscope, a magnetometer, or any other suitable sensor for measuring or sensing an object's or body's specific force or acceleration, an object's or body's angular rate, the orientation of an object or body, and/or the magnetic field around the object or body. Other suitable sensors 216 for machine 200 include, for example, a global positioning system (GPS) sensor or compass.

As indicated above, machine 200 can include one or more interlinks or buses 234 operable to transmit communications between the various hardware components of the machine. A system bus 234 can be any of several types of commercially available bus structures or bus architectures.

Although various example components of an example machine 200 are described and illustrated, not all components are required in each machine or device described herein and no machine or device described herein is limited to including just the example components described and illustrated herein. For example, any of the various devices described herein, such as device 114 or server 118, may comprise a different set and/or combination of the example components described and illustrated herein.

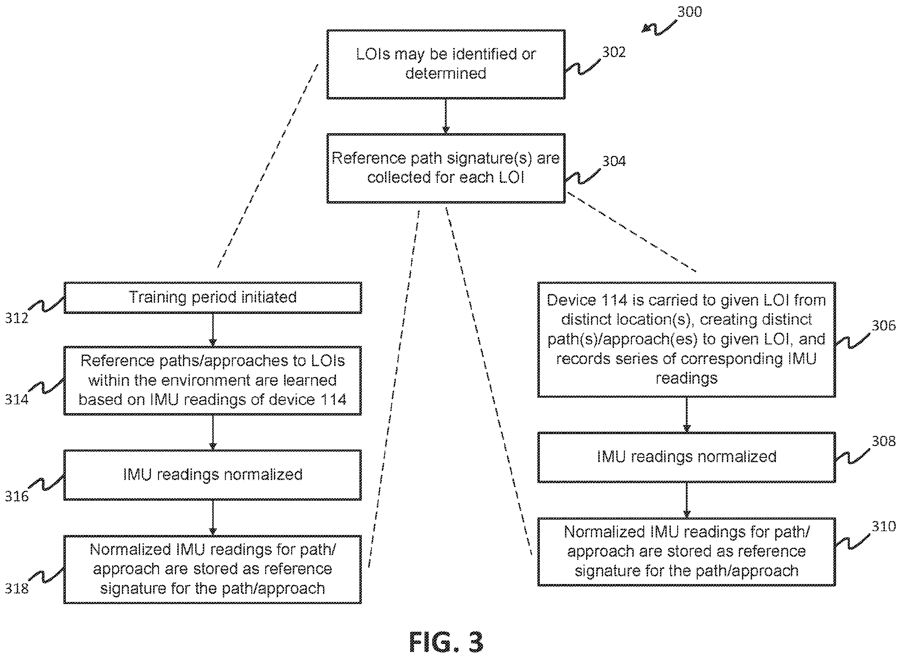

FIG. 3 is a flowchart generally illustrating a method 300 according to the invention for performing a calibration or measurement for known locations in an environment, such as example environment 100 of FIG. 1, for subsequent use in the methods of identifying or recognizing the location of a person based on signals from an IMU held or carried by the person, as further described herein. In step 302, one or more LOIs 102, 104, 106, 108, 110 may be identified or determined, such as by user 112 bringing device 114 to the location of each LOI and providing instruction to the device to record or store each location as an LOI. However, any other manner of identifying or determining one or more LOIs may be used. In some examples, identifying or determining the locations of LOIs may be collectively completed by a plurality of users 112 and/or using a plurality of devices 114. In step 304, one or more reference path signatures are collected for each LOI based on one or more reference paths 120, 122, 124, 126, 128, or portion thereof, to or between the LOIs. In an additional or alternative example, a separate reference path signature may be collected for several distinct approaches or approach paths 130 to an LOI, wherein an approach or approach path may comprise a path of any suitable distance preceding, and in some cases immediately preceding, the LOI. For example, if a room can be approached from a hallway from either of two directions, reference path signatures may be collected for each of the directions. In some examples, steps 302 and 304 may be carried out substantially simultaneously, in that, for example, the plurality of LOIs 102, 104, 106, 108, 110 may be identified or determined dynamically as the one or more reference path signatures are collected.

In one example, collecting one or more reference path signatures for a given LOI (e.g., 104) may include step 306 in which device 114 is carried to the given LOI from at least one other distinct location, such as one or more of the other LOIs (e.g., 102, 106, 108, 110) and/or from one or more distinct approach directions, creating one or more distinct paths (e.g., 120, 126) or approaches (e.g., 130) to the given LOI. While device 114 is carried, such as by user 112, from a known starting point to the given LOI (e.g., 104), the device can record a temporal series of IMU readings or signals corresponding to each distinct path (e.g., 120, 126) or approach (e.g., 130) to the given LOI. The IMU readings or signals may be recorded at any suitable interval, such as: substantially continuously, periodically, randomly, or according to any other repeating or non-repeating pattern or algorithm. As indicated above, the IMU of device 114 can include one or more of an accelerometer, a gyroscope, a magnetometer, or any other suitable sensor(s). The series of IMU readings corresponding to each distinct path (e.g., 120, 126) or approach (e.g., 130) to a given LOI (e.g., 104) may include a temporal series of individual readings from any one or more of the various sensors of the IMU or one or more combinations, such as concatenations or mathematical combinations, thereof, including multidimensional temporal sequences of readings of a plurality of any of the sensors of the IMU. In some examples, collecting reference path signatures for one or more LOIs may be collectively completed by a plurality of users 112 and/or using a plurality of devices 114.

In step 308, in order to compensate for the different orientations and positions of device 114 relative to the user's 112 body and/or a ground, floor, or earth surface, in an example, the raw IMU readings in the recorded series of IMU readings corresponding to each distinct path (e.g., 120, 126) or approach (e.g., 130) to a given LOI (e.g., 104) can be normalized or standardized. That is, in one example, the recorded series of IMU readings corresponding to each distinct path, approach, or subset thereof can be converted from a local coordinate system of device 114 (e.g., a phone-local coordinate system) to a normalized coordinate system, such as a coordinate system referenced to the earth (i.e., earth-local coordinate system) or a coordinate system referenced to some other known or fixed frame of reference. In other examples, the IMU readings may be normalized or standardized according to any suitable method or means and/or based on any suitable frame of reference. In an example, the IMU readings can be normalized by applying sensor fusion and/or filtering and/or using gravity and magnetic north to rotate the signals into a standard frame of reference independent of the orientation of device 114.

In step 310, for each distinct path (e.g., 120, 126) or approach (e.g., 130) to a given LOI (e.g., 104), the normalized or standardized series of IMU readings for the path, approach, or subset thereof can be stored as a reference path signature for the path or approach. In an example, a reference path signature for a given path (e.g., 120, 126), approach (e.g., 130), or subset thereof may simply comprise a concatenation or other suitable combination of the normalized or standardized IMU readings for the path, approach, or subset thereof. For example, a reference path signature for a given path (e.g., 120, 126), approach (e.g., 130), or subset thereof may simply comprise a concatenation or combination of the normalized or standardized accelerometer and/or gyroscope readings of the IMU corresponding to the path, approach, or subset thereof. In another example, the accelerometer and/or gyroscope readings of the IMU, or more generally, the normalized or standardized readings of a plurality of any of the various sensors of the IMU, may be combined into a multidimensional temporal sequence, which can be used as the reference signature for a given path (e.g., 120, 126), approach (e.g., 130), or subset thereof. Of course, in addition or alternative to readings from an accelerometer or gyroscope, other readings or signals may be also be used to create a path signature. For example, the complexity of some environments, such as a physical layout comprising many turns, stairs, uniquely shaped rooms or hallways, uniquely spaced rooms or hallways, or other physical features, may create an environment where the paths or approaches to the various LOIs of the environment are substantially unique and distinct. However, in other environments, the paths or approaches to many of the LOIs may not be as unique. In such environments, for example, magnetometer readings or signals from the IMU may additionally or alternatively be used (e.g., alone or concatenated or combined with other readings) to form a reference path signature. This may be especially advantageous in locations in which the magnetic field varies or has anomalies, such as anomalies in the field due to, for example but not limited to, nearby equipment or structures. In some examples, an environment (e.g., 100) may be intentionally provided with magnetic markers 132, 134, 136, such as electromagnets or other suitable magnets of varying strength and/or field direction, suitably placed within the environment to help generate distinct path or approach signatures for the LOIs.

In some examples, there may be further processing of the normalized or standardized series of IMU readings for a path (e.g., 120, 126), approach (e.g., 130), or subset thereof in order to determine or generate the reference path signature. Any suitable additional processing may be used. In an example, the IMU readings for a given path, approach, or subset thereof may be analyzed to define step, stride length, and/or heading information. The step, stride length, and/or heading information may be used alone or in combination, such as through concatenation or other mathematical combination, to determine or generate the reference path signature. The step, stride length, and/or heading information may also be used in combination with the normalized or standardized IMU readings. In another example, the normalized or standardized series of IMU readings for a given path, approach, or subset thereof may be approximated by methods such as, but not limited to, Piecewise Aggregate Approximation (PAA). In still another example, the normalized or standardized series of IMU readings for a given path, approach, or subset thereof may be further processed by methods such as Symbolic Aggregate approXimation (SAX) or Symbolic Fourier Approximation (SFA) in order to generate a symbolic representation of the IMU readings, which may then be stored as at least a portion of the reference path signature for the given path or approach.

Each reference path signature may be stored with an identifier and a label associating the reference path signature with the given LOI (e.g., 104). A reference path signature may also be stored with any other suitable information.

In another example, identifying LOIs and/or collecting one or more reference path signatures for one or more LOIs may include identifying or determining any LOIs and/or reference path signatures during a training or learning period. For example, in step 312, a training period may be initiated. The training period may be initiated, for example, when user 112 and/or device 114 first enters environment 100. However, the training period may be initiated at any suitable time, such as but not limited to, pursuant to instructions received at device 114 from user 112 to start the training period. In examples, the training period may be of predetermined length of time, such as but not limited to, a number of days, a number of weeks, etc. In some examples, the training period may extend indefinitely or until an end triggering event occurs. End triggering events may include but are not limited to: user 112 providing instruction, for example via device 114, to end the training period; reaching a certain or predetermined number of LOIs; reaching a certain or predetermined number of reference path signatures; reaching a device (e.g., 114) limitation, such as a certain memory capacity; etc.

In step 314, during the training period, while device 114 is carried, such as by user 112, throughout environment 100, one or more reference paths (e.g., 120, 122, 124, 126, 128) or approaches (e.g., 130) to one or more LOIs (e.g., 102, 104, 106, 108, 110) within the environment may be learned or identified based on temporal readings or signals from the IMU(s) of the device(s). In an example, the LOIs within the environment may be identified by user 112 prior to or at the outset of the training period. For example, user 112 may bring device 114 to certain or predetermined locations within environment 100 and provide instruction to the device to record or store each location as an LOI. In another example, user 112 may define one or more LOIs dynamically during the training period. For example, at any point during the training period, user 112 may visit or bring device 114 to a location within environment 100 that the user desires to add as an LOI. User 112 may then provide instruction to device 114 to record or store such location as an LOI. In another example, device 114 may automatically learn or identify locations within environment 100 to include as an LOI. Device 114 may use any suitable method for learning or determining whether a location should be added as an LOI. For example, device 114 may learn or determine that a location should be included as an LOI: because user 112 (with device 114) visits a certain location often, such as a predefined number of times; because user 112 (with device 114) stays in a certain location an extended or predefined period of time; based on a machine learning model trained with training data sets comprising, for example, pre-existing environment and LOI data or other suitable data; and/or based on any other suitable information. In some examples, device 114 may request confirmation input from user 112 before adding such a learned location as an LOI.

As indicated before, in some examples, identifying or determining the locations of LOIs may be collectively completed, at any suitable time (e.g., before or during a training period), by a plurality of users 112 and/or using a plurality of devices 114. Likewise, in some examples, collecting reference path signatures for one or more LOIs may be collectively completed during the training period by a plurality of users 112 and/or using a plurality of devices 114. Additionally, in some examples, initiation and/or termination of a training period may be completed by any one of a group of users 112 and/or using any one of a plurality of devices 114. Indeed, in some examples, information from multiple users may be incorporated or combined in order to more fully learn the LOIs, paths, and/or approaches within an environment, such as a large office complex or hospital.

In step 316, the raw IMU readings in the recorded series of IMU readings corresponding to each distinct path or approach determined in step 314 can be normalized or standardized. Normalizing or standardizing the raw IMU readings in step 316 may be performed similar to that previously described with respect to step 308. In step 318, for each distinct path or approach determined in step 314, the normalized or standardized series of IMU readings for the path, approach, or subset thereof can be stored as a reference path signature for the path or approach or optionally further processed before storing as a reference path signature for the path or approach. Further processing normalized or standardized IMU readings and/or storing reference path signatures in step 318 may be performed similar to that previously described with respect to step 310.

Yet another example of identifying LOIs and/or collecting one or more reference path signatures for one or more LOIs (i.e., steps 302, 304) may again include identifying or determining any LOIs and/or reference path signatures during a training or learning period. Such a training or learning period, as well as determining LOIs within environment 100, were previously described with respect to step 312. In an example, however, environment 100 may additionally include one or more network-connected devices, smart devices, or Internet-of-Things (IoT) devices, such as but not limited to: smart bulbs (e.g., 142, 144, 146); smart switches (e.g., 148), such as those for controlling other electronic devices, like lights, appliances, televisions, stereo systems, fireplaces, etc.; smart thermostats (e.g., 150); smart locks (e.g., 152, 154); etc. Device 114 can be in direct communication (e.g., using Bluetooth, BLE, RF, infrared, etc.) or networked communication, such as via network 116 or other suitable network, with any or each of these network-connected devices, smart devices, or IoT devices (which may be collectively referred to herein as IoT devices for simplicity) in order to monitor or interact therewith. In a step similar to step 314, one or more correlations between any given LOI and one or more of the IoT devices can be learned or identified based on changes in the state(s) of the IoT device(s) while device 114 is carried throughout environment 100 during the training period. For example, a common correlation between smart bulb 142 turning on and the user 112 (and device 114) being at LOI 104 may be learned or identified. Similarly, for example, a common correlation between smart bulb 144 and smart switch 148 (connected to, for example, a TV) both turning on and the user 112 (and device 114) being at LOI 106 may be learned or identified. As yet another example, a common correlation between thermostat 150 changing state (e.g., turning heat down), smart lock 154 locking, and the user 112 (and device 114) being at LOI 110 may be learned or identified. Any other suitable information may also be used to identify correlations, such as time of day, day of the week, order of IoT devices being affected, etc. For example, a common correlation smart bulb 144 and smart switch 148 both turning off at night (e.g., between around 9 pm and midnight) and the user 112 (and device 114) staying at LOI 104 until around 6 am the next morning may be learned or identified. The above correlations between user location and IoT device state changes, either alone or in combination with IMU readings (as previously described), may be stored directly as reference path signatures or a portion thereof or may be stored as additional data associated with respective reference path signatures already determined based on IMU readings. In some examples, there may be further processing of a correlation before determining or generating the reference path signature or storing as additional data. Any suitable additional processing may be used.

Any of the example methods for identifying LOIs and/or collecting one or more reference path signatures for one or more LOIs may be used alone or in combination with one another. That is, while any of the foregoing example methods for identifying LOIs and/or collecting one or more reference path signatures for one or more LOIs may be used by itself, the methods are not exclusive of each other and may be used in any combination to determine reference path signatures within environment 100. Moreover, although the flowchart of FIG. 3 illustrates an example method as comprising sequential steps or processes as having a particular order of operations, some or many of the steps or operations in the flowchart can be performed in parallel or concurrently, and the flowchart should be read in the context of the various example embodiments of the present disclosure. The order of the method steps or process operations illustrated in FIG. 3 may be rearranged for some embodiments. Similarly, the method illustrated in FIG. 3 could have additional steps or operations not included therein or fewer steps or operations than those shown. Additionally, many of the steps of the example method of FIG. 3 may be carried out by and/or are described as being carried out by device 114. However, in other examples, many of the steps of the example method of FIG. 3 may be carried out by server 116 or a combination of device 114 and server 116.

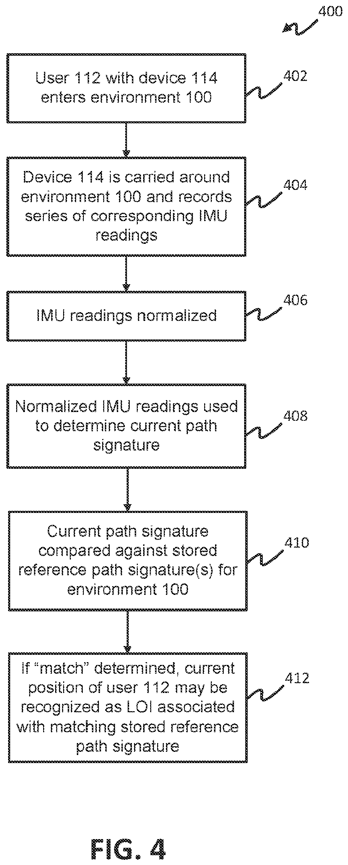

Once one or more reference path signatures for an environment 100 are collected, the reference path signatures may be used to identify or recognize the location, or in some cases a predicted future location, of a person within the environment based on IMU readings or signals of a device held or carried by the person and generated during a recently preceding or current path taken by the person. FIG. 4 is a flowchart generally illustrating an example method 400 for identifying or recognizing the location of a person based on signals from an IMU held or carried by the person, with reference to the environment 100 of FIG. 1. In step 402, user 112 holding or carrying device 114 having an IMU enters environment 100. The user 112 and/or device 114 may be, but need not be, the same user(s) and/or device(s) used for calibrating the environment 100, as described above with respect to FIG. 3. In step 404, while device 114 is carried around the environment by user 112, the device can record a temporal series of IMU readings or signals. The IMU readings or signals may be recorded at any suitable interval, such as: substantially continuously, periodically, randomly, or according to any other repeating or non-repeating pattern or algorithm. In step 406, in order to compensate for the different orientations and positions of device 114 relative to the user's 112 body and/or a ground, floor, or earth surface, in an example, the raw IMU readings in the recorded series of IMU readings can be normalized or standardized. Normalizing or standardizing the raw IMU readings in step 406 may be performed similar to that previously described with respect to step 308 in FIG. 3. In step 408, at any time, *t*, corresponding to the user's current position, at least a portion of the normalized or standardized series of IMU readings preceding time *t* can be used to determine or generate a current path signature for the current path or approach 138 preceding the user's position at time *t* (e.g., the user's current position 140, represented by a device in phantom line). In an example, any portion of the normalized or standardized series of IMU readings preceding time *t* can be used to determine or generate the current path signature for user 112. Similarly, multiple current path signatures for the path or approach 138 preceding the user's current position 140 may be determined or generated from differing portions or temporal periods of the normalized or standardized series of IMU readings preceding time *t*. Methods and examples for determining or generating a path signature (e.g., for a reference path signature) based on IMU readings were previously described with respect to step 310 in FIG. 3, and the same methods or examples may be used for determining or generating a current path signature.

In step 410, a current path signature may be compared or analyzed against the stored reference path signature(s) for environment 100 to determine if the current path signature substantially matches, substantially aligns, or corresponds to any reference path signature, or any portion of a reference path signature. In an example, a current path signature may be compared or analyzed against the stored reference path signature(s), or any portion(s) thereof, for environment 100 to determine if the current path signature matches or aligns with any reference path signature, or portion thereof, within a predefined or predetermined tolerance. Determining whether a current path signature substantially matches, substantially aligns, or corresponds to a reference path signature, or portion thereof, may be performed using any suitable method(s), algorithm(s), or combination thereof. For example, determining whether a current path signature substantially matches, substantially aligns, or corresponds to a reference path signature, or portion thereof, may be performed using one or more methods or algorithms such as: k-nearest neighbors algorithm (k-NN); Mahalanobis distance measure(s), either directly or, for example, following a decomposition, such as by principle component analysis (PCA); decision tree(s); artificial neural network(s) (ANN); dynamic time warping (DTW); etc. As explained above, path signatures (e.g., reference path signatures or current path signatures) may be symbolically represented, for example, using processing methods such as SAX or SFA. Such symbolic representations of current and reference path signatures may be compared using a variety of classification techniques based on, for example but not limited to, a bag-of-words model (e.g., unordered similarity), an ordered similarity model, such as, Levenshtein distance(s), or other suitable methods.

In step 412, if a "match" between a current path signature and a stored reference path signature for environment 100 is determined, the current position 140 of user 112 (holding device 114) may be identified or recognized as corresponding to the LOI associated with the matching stored reference path signature. Alternatively or additionally, in step 412, if a "match" between a current path signature and a portion of a stored reference path signature, such as a portion of the reference path signature corresponding to a sub-portion of a path, for example the portion 156 of path 122, heading toward or leading to a given LOI (e.g., 106) but not ending at the LOI, is determined, then a predicted future position of user 112 (holding device 114) may be identified or recognized as corresponding to the LOI (e.g., 106) associated with the matching stored reference path signature. Any other suitable information or algorithm(s) may also be used to help determine such a predicted future position. For example, it may be known that user 112 only has access to LOIs 106 and 108 (e.g., has access credentials for LOIs 106 and 108), and particularly does not have access to LOI 110. Accordingly, if a "match" between a current path signature and a portion of a stored reference path signature corresponding to portion 156 of path 122 is determined, knowing that portion 156 does not correspond to LOI 108 (e.g., the only other place user 112 has access to) and particularly that the user does not have access to LOI 110 (which portion 156 might otherwise also align with), it may be determined that LOI 106 is a predicted future position of the user. In some environments, the reference path signatures, or portions thereof, for two or more LOIs might not be easily distinguished with sufficient accuracy. In examples, one method for addressing environments that might otherwise have similar reference path signatures, or portions thereof, for two or more LOIs is, as mentioned previously, to use or incorporate magnetometer readings from the IMU of device 114 into the reference and current path signatures and, optionally, to provide the environment (e.g., 100) with magnetic markers 132, 134, 136, such as electromagnets or other suitable magnets of varying strength and/or field direction, suitably placed within the environment to help create further distinction between path or approach signatures for the various LOIs in the environment. In additional or alternative examples, a "match" between a current path signature and a stored reference path signature, or portion thereof, may rely on a determination that the current path signature substantially matches, substantially aligns, or corresponds to the referenced path signature, or portion thereof, in combination with data about one or more preceding LOIs identified as visited by user 112 (holding device 114) and/or the reference path signature(s) corresponding to such one or more preceding LOIs. For example, if the user's current path signature is determined to be similar to a stored reference path signature, or portion thereof, for LOI 110 as well as a stored reference path signature, or portion thereof, for LOI 102, a "match" may further be determined based on data about one or more immediately preceding LOIs determined to be visited by user 112. For example, if it was determined that user 112 previously visited LOI 106, which is significantly closer to LOI 110 than LOI 102, then a most likely "match" for the current path signature might be determined as the reference path signature, or portion thereof, corresponding to LOI 110 as opposed to the reference path signature, or portion thereof, corresponding to LOI 102. Any suitable information about one or more preceding LOIs may be used, such as but not limited to, proximity of the LOI(s), prior visitation pattern(s) of the user or others involving the one or more preceding LOIs, etc.

In some examples, various steps or combinations of steps in example method 400, may generally run continuously or substantially continuously, at predefined times, periodically, upon receiving, detecting, or identifying a triggering event, and/or randomly while user 112 holding or carrying device 114 moves around environment 100. For example, the steps of comparing a current path signature to one or more reference path signatures, or portions thereof, (i.e., step 410) and determining if there is a "match" (i.e., step 412) may generally be performed on a continuous or substantially continuous basis. For example, steps 410 and 412 (and/or any other steps of method 400) may be performed after receiving each reading or relatively short series of readings, such as but not limited to, 1 second of readings, 2 seconds of readings, etc., from the IMU of device 114, so as to generally give the practical effect of occurring continuously or substantially continuously. As another example, steps 410 and 412 (and/or any other steps of method 400) may be performed periodically, such as but not limited to, every predefined number of seconds (e.g., 10 seconds, 20 seconds, etc.) or minutes (e.g., 1 minute, 2 minutes, etc.). In still another example, steps 410 and 412 (and/or any other steps of method 400) may be performed upon detecting a triggering event, such as a detecting a certain state of device 114, detecting a certain motion, or lack thereof, of device 114, receiving certain user input at device 114, or any other suitable detectable or identifiable triggering event. For example, if it is detected that device 114 has substantially stopped moving in any horizontal direction (e.g., user 112 stops walking or the user sits or lies down), method 400 may identify this as a triggering event and steps 410 and 412 (and/or any other steps of method 400) may be performed. Also for example, if user input at device 114, such as one or more taps or other action received at the device, is detected, method 400 may identify this as a triggering event, and steps 410 and 412 (and/or any other steps of method 400) may be performed. Use of buffers, such as but not limited to, a circular buffer, may be incorporated into the example method 400 in order to keep data about the user's 112 current path or approach available for extended periods of time.

In some examples, in addition to using IMU readings to determine the user's 112 current path signature or as an alternative to using IMU readings to determine the user's current path signature, the user's current path signature may be determined as, or include, interactions with, or state changes of, one or more IoT devices. In a particular example, as user 112 (holding device 114) moves within environment 100, interactions or state changes of such IoT devices may be monitored or recorded. For example, as user 112 (holding device 114) moves within environment 100, it might be determined that smart bulb 144 and smart switch 148 (connected to, for example, a TV) are turned on. Such interaction(s) or monitored state change(s) of the IoT device(s) may form at least part of the user's 112 current path signature and may be compared or analyzed against any correlation(s) stored as or included in reference path signature(s) for environment 100, as previously described with respect to FIG. 3, in order to determine, or assist in determining, whether there is a "match" between the user's current path signature and a reference path signature.

In additional or other examples, correlations between user 112 and/or device 114 and one or more IoT devices, as described above with respect to FIG. 3, may be used to determine any actions or state changes to any IoT devices that correspond with the user's current path, and the IoT devices may be controlled to take any such corresponding actions or make any such corresponding state changes. For example, the user's 112 current path may be determined and "matched" with a stored reference path signature, or portion thereof, of environment 100 pursuant to steps 402 to 412. The "matching" reference path signature, or portion thereof, may include additional data corresponding to one or more correlations with one or more IoT devices that are commonly associated with the "matching" reference path signature. For example, the "matching" reference path signature, or portion thereof, might place user 112 at, or predict the future position of the user to be, LOI 106 and be associated with correlation data indicating that smart bulb 144 and smart switch 148 (connected to, for example, a TV) are both typically turned on. Accordingly, device 114 may communicate directly or via a network, and/or optionally through one or more other computing devices, such as server 118, with any IoT device(s) associated with the correlation and control or instruct the corresponding IoT device(s) to take the action identified by the correlation data. For example, pursuant to the foregoing example placing user 112 at LOI 106, smart bulb 144 and smart switch 148 can, according to the corresponding correlation data, be turned on automatically for the user. As another example, in an enterprise or commercial environment, a reference path signature for a particular LOI corresponding to a controlled entryway that leads to a hallway might be associated with correlation data indicating that the lights in the hallway are, or should be, turned on when the controlled entryway is accessed. Accordingly, if it is determined that the user's current path signature "matches" this reference path signature, or portion thereof, and optionally, for example, the user has appropriate or verified credentials for accessing the entryway, the hallway lights may, according to the corresponding correlation date, be turned on (if they are off) automatically.

Although the flowchart of FIG. 4 illustrates an example method as comprising sequential steps or processes as having a particular order of operations, some or many of the steps or operations in the flowchart can be performed in parallel or concurrently, and the flowchart should be read in the context of the various example embodiments of the present disclosure. The order of the method steps or process operations illustrated in FIG. 4 may be rearranged for some embodiments. Similarly, the method illustrated in FIG. 4 could have additional steps or operations not included therein or fewer steps or operations than those shown. Additionally, many of the steps of the example method of FIG. 4 may be carried out by and/or are described as being carried out by device 114. However, in other examples, many of the steps of the example method of FIG. 4 may be carried out by server 116 or a combination of device 114 and server 116.

The various examples and embodiments for recognizing the location of a person based on signals from an IMU described herein advantageously enable the tracking of a person's location and/or path using, for example, just an IMU or sensors commonly found on typical smart devices, such as smart phones or tablet PCs, without the need for tracking via signals from a GNSS or requiring interaction with the environment using RF beacon and receiver devices. Accordingly, the various examples and embodiments for recognizing the location of a person based on signals from an IMU described herein advantageously, accurately, and efficiently permit tracking of a person's location and/or path in, for example, indoor environments or environments where GNSS signals are attenuated.

### Additional Notes

The above detailed description includes references to the accompanying drawings, which form a part of the detailed description. The drawings show, by way of illustration, specific embodiments that can be practiced. These embodiments may also be referred to herein as "examples." Such embodiments or examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein. That is, the above-described embodiments or examples or one or more aspects, features, or elements thereof can be used in combination with each other.

As will be appreciated by one of skill in the art, the various embodiments of the present disclosure may be embodied as a method (including, for example, a computer-implemented process, a business process, and/or any other process), apparatus (including, for example, a system, machine, device, computer program product, and/or the like), or a combination of the foregoing. Accordingly, embodiments of the present disclosure or portions thereof may take the form of an entirely hardware embodiment, an entirely software embodiment (including firmware, middleware, microcode, hardware description languages, etc.), or an embodiment combining software and hardware aspects. Furthermore, embodiments of the present disclosure may take the form of a computer program product on a computer-readable medium or computer-readable storage medium, having computer-executable program code embodied in the medium, that define processes or methods described herein. A processor or processors may perform the necessary tasks defined by the computer-executable program code. In the context of this disclosure, a computer readable medium may be any medium that can contain, store, communicate, or transport the program for use by or in connection with the systems disclosed herein. As indicated above, the computer readable medium may be, for example but is not limited to, an electronic, magnetic, optical, electromagnetic, infrared, or semiconductor system, apparatus, or device. More specific examples of suitable computer readable medium include, but are not limited to, an electrical connection having one or more wires or a tangible storage medium such as a portable computer diskette, a hard disk, a random access memory (RAM), a read-only memory (ROM), an erasable programmable read-only memory (EPROM or EEPROM), a compact disc read-only memory (CD-ROM), or other optical, magnetic, or solid state storage device. As noted above, computer-readable media includes, but is not to be confused with, computer-readable storage medium, which is intended to cover all physical, non-transitory, or similar embodiments of computer-readable media.

In the foregoing description various embodiments of the present disclosure have been presented for the purpose of illustration and description. They are not intended to be exhaustive or to limit the invention to the precise form disclosed. Obvious modifications or variations are possible in light of the above teachings. The various embodiments were chosen and described to provide the best illustration of the principals of the disclosure and their practical application, and to enable one of ordinary skill in the art to utilize the various embodiments with various modifications as are suited to the particular use contemplated.

## Claims

1. A method for performing a calibration or measurement for known locations in an environment (100), the method comprising:
identifying (302) one or more locations of interest, LOIs, (102, 104, 106, 108, 110) within the environment (100) wherein the identifying the one or more LOIs (102, 104, 106, 108, 110) within the environment (100) comprises, for each of the one or more LOIs (102, 104, 106, 108, 110), receiving instruction from a device (114) at a unique location within the environment (100) to identify the unique location as an LOI (102, 104, 106, 108, 110);
determining (304) a reference path signature for each of the one or more LOIs (102, 104, 106, 108, 110) based on one or more reference paths (120,122,124,126,128), or portion thereof, to or between the LOIs; and
for each reference path signature, storing (310,318) the reference path signature with data indicating to which LOI (102, 104, 106, 108, 110) it corresponds.

2. The method of Claim 1, wherein identifying the one or more LOIs (102, 104, 106, 108, 110) within the environment (100) comprises initiating (312) a training period during which the one or more LOIs (102, 104, 106, 108, 110) are learned dynamically based on locations of a device (114) as it is moved throughout the environment (100).

3. The method of any one of the preceding claims, wherein determining the reference path signature for each of the one or more LOIs (102, 104, 106, 108, 110) comprises, for a given LOI (102, 104, 106, 108, 110) of the one or more LOIs (102, 104, 106, 108, 110), receiving a series of signals from an inertial measurement unit ,IMU, being carried (306) along a path of a user (112) within the environment (100) to the given LOI (102, 104, 106, 108, 110).

4. The method of Claim 3, wherein determining the reference path signature for each of the one or more LOIs (102, 104, 106, 108, 110) further comprises, for the given LOI (102, 104, 106, 108, 110), normalizing (308) at least a portion of the series of signals from the IMU to a defined frame of reference within the environment (100) to define a normalized series of signals.

5. The method of Claim 4, wherein determining the reference path signature for each of the one or more LOIs (102, 104, 106, 108, 110) further comprises, for the given LOI (102, 104, 106, 108, 110), determining the normalized series of signals to form at least part of the reference path signature for the given LOI (102, 104, 106, 108, 110).

6. The method of Claim 4 or 5, wherein determining the reference path signature for each of the one or more LOIs (102, 104, 106, 108, 110) further comprises, for the given LOI (102, 104, 106, 108, 110), processing the normalized series of signals to determine processed signal data and determining the processed signal data to form at least part of the reference path signature for the given LOI (102, 104, 106, 108, 110).

7. The method of Claim 6, wherein the processed signal data comprises at least one of step data corresponding to the path of the user (112), stride length data corresponding to the path of the user (112), or heading data corresponding to the path of the user (112).

8. The method of Claim 6 or 7, wherein the processed signal data comprises an approximation of the normalized series of signals based on Piecewise Aggregate Approximation (PAA).

9. The method of any one of Claims 6, 7, or 8, wherein the processed signal data comprises a symbolic approximation of the normalized series of signals based on at least one of Symbolic Aggregate approXimation (SAX) or Symbolic Fourier Approximation (SFA).

10. The method of any one of Claims 3 to 9, wherein the series of signals from the IMU comprises signals from at least one of an accelerometer, a gyroscope, or a magnetometer.

11. The method of any one of Claims 3 to 10, wherein the series of signals from the IMU comprises a combination of signals from two or more of an accelerometer, a gyroscope, or a magnetometer.

12. The method of Claim 1, wherein determining the reference path signature for each of the one or more LOIs (102, 104, 106, 108, 110) comprises, for a given LOI (102, 104, 106, 108, 110) of the one or more LOIs (102, 104, 106, 108, 110), determining a correlation between the given LOI (102, 104, 106, 108, 110) and a state of an Internet-of-Things ,IoT, device located within the environment (100).

13. The method of Claim 12, wherein determining the reference path signature for each of the one or more LOIs (102, 104, 106, 108, 110) further comprises, for the given LOI (102, 104, 106, 108, 110), determining the correlation to form at least part of the reference path signature for the given LOI (102, 104, 106, 108, 110).

14. A computer readable medium comprising executable program code, that when executed by one or more processors, causes the one or more processors to perform the method of any one of Claims 1 to 13.

## Patentansprüche

1. Verfahren zum Ausführen einer Kalibrierung oder einer Messung für bekannte Orte in einer Umgebung (100), welches Verfahren aufweist:
Identifizieren (302) von einem oder mehreren Orten von Interesse, LOIs, (102, 104, 106, 108, 110) innerhalb der Umgebung (100), bei dem das Identifizieren des einen oder der mehreren LOIs (102, 104, 106, 108, 110) innerhalb der Umgebung (100), für jeden des einen oder der mehreren LOIs (102, 104, 106, 108, 110), Empfangen einer Anweisung von einer Vorrichtung (114) an einem eindeutigen Ort innerhalb der Umgebung (100) zum Identifizieren des eindeutigen Orts als ein LOI (102, 104, 106, 108, 110) aufweist;
Bestimmen (304) einer Referenzpfadsignatur für jeden des einen oder der mehreren LOIs (102, 104, 106, 108, 110) basierend auf einem oder mehreren Referenzpfaden (120, 122, 124, 126, 128), oder einem Abschnitt davon, zu oder zwischen den LOIs; und
für jede Referenzpfadsignatur Speichern (310, 318) der Referenzpfadsignatur mit Daten, die anzeigen, welchem LOI (102, 104, 106, 108, 110) diese entspricht.

2. Verfahren nach Anspruch 1, bei dem das Identifizieren des einen oder der mehreren LOIs (102, 104, 106, 108, 110) innerhalb der Umgebung (100) Initiieren (312) eines Trainingszeitabschnitts, während dessen der eine oder die mehreren LOIs (102, 104, 106, 108, 110) dynamisch gelernt werden, basierend auf Standorten einer Vorrichtung (114), die durch die Umgebung (100) bewegt wird, aufweist.

3. Verfahren nach einem der vorhergehenden Ansprüche, bei dem das Bestimmen der Referenzpfadsignatur für jeden des einen oder der mehreren LOIs (102, 104, 106, 108, 110), für einen gegebenen LOI (102, 104, 106, 108, 110) aus dem einen oder den mehreren LOIs (102, 104, 106, 108, 110), Empfangen einer Reihe von Signalen von einem Trägheitsmessgerät, IMU, das entlang eines Pfads eines Nutzers (112) innerhalb der Umgebung (100) zu dem gegebenen LOI (102, 104, 106, 108, 110) getragen (306) wird, aufweist.

4. Verfahren nach Anspruch 3, bei dem das Bestimmen der Referenzpfadsignatur für jeden des einen oder der mehreren LOIs (102, 104, 106, 108, 110) weiter, für den gegebenen LOI (102, 104, 106, 108, 110), Normalisieren (308) mindestens eines Abschnitts der Reihe von Signalen von dem IMU zu einem definierten Bezugsrahmen innerhalb der Umgebung (100) zum Definieren einer normalisierten Reihe von Signalen aufweist.

5. Verfahren nach Anspruch 4, bei dem das Bestimmen der Referenzpfadsignatur für jeden des einen oder der mehreren LOIs (102, 104, 106, 108, 110) weiter, für den gegebenen LOI (102, 104, 106, 108, 110), Bestimmen der normalisierten Reihe von Signalen zum Bilden mindestens eines Teils der Referenzpfadsignatur für den gegebenen LOI (102, 104, 106, 108, 110) aufweist.

6. Verfahren nach Anspruch 4 oder 5, bei dem das Bestimmen der Referenzpfadsignatur für jeden des einen oder der mehreren LOIs (102, 104, 106, 108, 110) weiter, für den gegebenen LOI (102, 104, 106, 108, 110), Verarbeiten der normalisierten Reihe von Signalen zum Bestimmen von verarbeiteten Signaldaten und Bestimmen der verarbeiteten Signaldaten zum Bilden mindestens eines Teils der Referenzpfadsignatur für den gegebenen LOI (102, 104, 106, 108, 110) aufweist.

7. Verfahren nach Anspruch 6, bei dem die verarbeiteten Signaldaten mindestens einem aus Schrittdaten, die dem Pfad des Nutzers (112) entsprechen, Schrittlängendaten, die dem Pfad des Nutzers (112) entsprechen, oder Richtungsdaten, die dem Pfad des Nutzers (112) entsprechen, aufweisen.

8. Verfahren nach Anspruch 6 oder 7, bei dem die verarbeiteten Signaldaten eine Näherung der normalisierten Reihe von Signalen, basierend auf einer stückweise aggregierten Approximation (PAA), aufweisen.

9. Verfahren nach einem der Ansprüche 6, 7 oder 8, bei dem die verarbeiteten Signaldaten eine symbolische Approximation der normalisierten Reihe von Signalen, basierend auf mindestens einer aus einer symbolisch aggregierten Approximation (SAX) oder einer symbolischen Fourier-Approximation (SFA), aufweisen.

10. Verfahren nach einem der Ansprüche 3 bis 9, bei dem die Reihe von Signalen von dem IMU Signale von mindestens einem aus einem Beschleunigungssensor, einem Gyroskop oder einem Magnetometer aufweist.

11. Verfahren nach einem der Ansprüche 3 bis 10, bei dem die Reihe von Signalen von dem IMU eine Kombination von Signalen von zwei oder mehreren aus einem Beschleunigungssensor, einem Gyroskop oder einem Magnetometer aufweist.

12. Verfahren nach Anspruch 1, bei dem das Bestimmen der Referenzpfadsignatur für jeden des einen oder der mehreren LOIs (102, 104, 106, 108, 110), für einen gegebenen LOI (102, 104, 106, 108, 110) aus dem einen oder den mehreren LOIs (102, 104, 106, 108, 110), Bestimmen einer Korrelation zwischen dem gegebenen LOI (102, 104, 106, 108, 110) und einem Zustand einer Internet-der-Dinge-, IoT-, Vorrichtung, die sich innerhalb der Umgebung (100) befindet, aufweist.

13. Verfahren nach Anspruch 12, bei dem das Bestimmen der Referenzpfadsignatur für jeden des einen oder der mehreren LOIs (102, 104, 106, 108, 110) weiter, für den gegebenen LOI (102, 104, 106, 108, 110), Bestimmen der Korrelation zum Bilden mindestens eines Teils der Referenzpfadsignatur für den gegebenen LOI (102, 104, 106, 108, 110) aufweist.

14. Computerlesbares Medium, das einen ausführbaren Programmcode aufweist, der, wenn er durch einen oder mehrere Prozessoren ausgeführt wird, den einen oder die mehreren Prozessoren dazu veranlasst, das Verfahren nach einem der Ansprüche 1 bis 13 auszuführen.

## Revendications

1. Procédé permettant d'effectuer un étalonnage ou une mesure pour des emplacements connus dans un environnement (100), le procédé comprenant les étapes consistant à :
identifier (302) un ou plusieurs emplacements d'intérêt, LOI, (102, 104, 106, 108, 110), au sein de l'environnement (100), où l'identification du ou des LOI (102, 104, 106, 108, 110) au sein de l'environnement (100) comprend, pour chacun du ou des LOI (102, 104, 106, 108, 110), la réception d'une instruction provenant d'un dispositif (114) situé à un emplacement unique au sein de l'environnement (100) afin d'identifier cet emplacement unique comme un LOI (102, 104, 106, 108, 110) ;
déterminer (304) une signature de trajet de référence pour chacun du ou des LOI (102, 104, 106, 108, 110) sur la base d'un ou plusieurs trajets de référence (120, 122, 124, 126, 128), ou d'une partie de ceux-ci, vers ou entre les LOI ; et
pour chaque signature de trajet de référence, stocker (310, 318) la signature de trajet de référence avec des données indiquant à quel LOI (102, 104, 106, 108, 110) elle correspond.

2. Procédé selon la revendication 1, dans lequel l'identification du ou des LOI (102, 104, 106, 108, 110) au sein de l'environnement (100) comprend le lancement (312) d'une période d'apprentissage au cours de laquelle le ou les LOI (102, 104, 106, 108, 110) sont appris de manière dynamique en fonction des emplacements d'un dispositif (114) à mesure qu'il se déplace dans l'environnement (100).

3. Procédé selon l'une quelconque des revendications précédentes, dans lequel la détermination de la signature de trajet de référence pour chacun du ou des LOI (102, 104, 106, 108, 110) comprend, pour un LOI donné (102, 104, 106, 108, 110) parmi le ou les LOI (102, 104, 106, 108, 110), la réception d'une série de signaux provenant d'une unité de mesure inertielle, IMU, transportée (306) le long d'un trajet d'un utilisateur (112) au sein de l'environnement (100) jusqu'au LOI donné (102, 104, 106, 108, 110).

4. Procédé selon la revendication 3, dans lequel la détermination de la signature de trajet de référence pour chacun du ou des LOI (102, 104, 106, 108, 110) comprend en outre, pour un LOI donné (102, 104, 106, 108, 110), la normalisation (308) d'au moins une partie de la série de signaux provenant de l'IMU vers un référentiel défini au sein de l'environnement (100) afin de définir une série normalisée de signaux.

5. Procédé selon la revendication 4, dans lequel la détermination de la signature de trajet de référence pour chacun du ou des LOI (102, 104, 106, 108, 110) comprend en outre, pour le LOI donné (102, 104, 106, 108, 110), la détermination de la série normalisée de signaux destinée à former au moins une partie de la signature de trajet de référence pour le LOI donné (102, 104, 106, 108, 110).

6. Procédé selon la revendication 4 ou 5, dans lequel la détermination de la signature de trajet de référence pour chacun du ou des LOI (102, 104, 106, 108, 110) comprend en outre, pour le LOI donné (102, 104, 106, 108, 110), le traitement de la série normalisée de signaux afin de déterminer des données de signaux traitées, et la détermination des données de signaux traités pour former au moins une partie de la signature de trajet de référence pour le LOI donné (102, 104, 106, 108, 110).

7. Procédé selon la revendication 6, dans lequel les données de signaux traités comprennent au moins l'une des données parmi des données de pas correspondant au trajet de l'utilisateur (112), des données de longueur de foulée correspondant au trajet de l'utilisateur (112) ou des données de cap correspondant au trajet de l'utilisateur (112).

8. Procédé selon la revendication 6 ou 7, dans lequel les données de signaux traités comprennent une approximation de la série normalisée de signaux basée sur l'approximation agrégée par morceaux (PAA).

9. Procédé selon l'une quelconque des revendications 6, 7 ou 8, dans lequel les données de signaux traités comprennent une approximation symbolique de la série normalisée de signaux basée sur au moins l'une des méthodes suivantes : l'approximation agrégée symbolique (SAX) ou l'approximation de Fourier symbolique (SFA).

10. Procédé selon l'une quelconque des revendications 3 à 9, dans lequel la série de signaux provenant de l'IMU comprend des signaux provenant d'au moins un élément parmi un accéléromètre, un gyroscope ou un magnétomètre.

11. Procédé selon l'une quelconque des revendications 3 à 10, dans lequel la série de signaux provenant de l'IMU comprend une combinaison de signaux provenant de deux ou plus éléments parmi un accéléromètre, un gyroscope ou un magnétomètre.

12. Procédé selon la revendication 1, dans lequel la détermination de la signature de trajet de référence pour chacun du ou des LOI (102, 104, 106, 108, 110) comprend, pour un LOI donné (102, 104, 106, 108, 110) parmi le ou les LOI (102, 104, 106, 108, 110), la détermination d'une corrélation entre le LOI donnée (102, 104, 106, 108, 110) et un état d'un dispositif de l'Internet des objets (IoT) situé au sein de l'environnement (100).

13. Procédé selon la revendication 12, dans lequel la détermination de la signature de trajet de référence pour chacun du ou des LOI (102, 104, 106, 108, 110) comprend en outre, pour le LOI donné (102, 104, 106, 108, 110), la détermination de la corrélation permettant de former au moins une partie de la signature de trajet de référence pour le LOI donné (102, 104, 106, 108, 110).

14. Support lisible par ordinateur comprenant un code de programme exécutable qui, lorsqu'il est exécuté par un ou plusieurs processeurs, amène le ou les processeurs à mettre en œuvre le procédé selon l'une quelconque des revendications 1 à 13.
